# EUROPEAN PATENT APPLICATION

(11) **EP 4 170 340 A1**
(43) Date of publication of application: **26.04.2023**
(21) Application number: 21204430.9
(22) Date of filing: 25.10.2021
(51) Int. Cl.: G01N 30/12, G01N 30/88, G01N 30/78

(54) **GAS CHROMATOGRAPHY INSTRUMENT FOR AUTONOMOUSLY DETERMINING A CONCENTRATION OF A VOLATILE MARKER IN A LIQUID SAMPLE**

(71) Applicant: Koninklijke Philips N.V., 5656 AG Eindhoven (NL)
(72) Inventor: VERSCHUEREN, Alwin Rogier Martijn, Eindhoven (NL); RONDA, Cornelis Reinder, Eindhoven (NL)
(74) Representative: Philips Intellectual Property & Standards

(57) **Abstract**

The invention relates to a gas chromatography instrument 2 for autonomously determining a concentration of a volatile marker in a liquid sample. The instrument 2 comprises a sampling device 8 configured for autonomously sampling a liquid to be analyzed, a gas sensor 14, and a conversion device 12 connected to the sampling device 8 and the gas sensor 14. By utilizing a conversion device 12 that is configured to autonomously convert the sampled liquid into a gas to be analyzed by the gas sensor 14, an automated continuous monitoring of relevant markers in liquid samples is achieved.

## Description

### FIELD OF THE INVENTION

The invention relates to a gas chromatography instrument, method and computer program for autonomously determining a concentration of a volatile marker in a liquid sample.

### BACKGROUND OF THE INVENTION

A gas chromatography instrument is a well-known instrument for detecting and determining the concentration of gas compounds. It consists of a chromatographic column that has the ability to separate a mixture of gasses into individual components, and a detector that outputs a signal depending on the concentration and/or type of gas that passes through it.

From the prior art, chromatographic instruments are known that allow for a continuous or semi-continuous monitoring of a gas sample utilizing a so-called sample loop. However, sample loops allow for an analysis of gas samples, only. Hence, for applications in which a continuous or semi-continuous monitoring of liquids is required, such devices cannot be used in a satisfactory way.

Other devices known from the prior art allow for an analysis of liquid samples, but require providing single liquid doses manually, not autonomously. Such devices are known from US 9 435 772 B2 and EP 2 924 429 A1.

### SUMMARY OF THE INVENTION

It is an object of the present invention to provide a gas chromatography instrument, method and computer program for autonomously determining a concentration of a volatile marker in a liquid sample.

In a first aspect, a gas chromatography instrument for autonomously determining a concentration of a volatile marker in a liquid sample is presented, the instrument comprising a sampling device configured for autonomously sampling a liquid to be analyzed, a gas sensor, and a conversion device connected to the sampling device and the gas sensor, wherein the conversion device is configured to autonomously convert the sampled liquid into a gas to be analyzed by the gas sensor.

It has been found that by automatically and continuously sampling a liquid to be analyzed and then convert the liquid into a gas that can be analyzed by a gas sensor, multiple types of gas sensors are available that have superior performance in terms of re-usability, reliability and affordability compared to liquid sensors known from the prior art to analyze liquid samples.

The term autonomously is to be understood within this application as continuous or semi-continuous operation, without requiring manual activities from a human operator in the stages between the liquid sampling input stage and sensor output stage. A semi-continuous operation may be conducted, for example, at least hourly.

The proposed gas chromatography instrument may be utilized in agricultural settings for monitoring relevant substances in the substrate or soil water of plants, cow milk or urine collected in the floor of a barn. Another field of application is human healthcare at which relevant biomarkers may be monitored such as creatinine, glucose and cortisol levels from a patient's bloodline or urinary catheter at the hospital bedside or at home.

In a preferred embodiment, the sampling device is connected to a fluid sampling inlet and to a fluid sampling outlet, wherein fluid to be analyzed is provided by the fluid sampling inlet continuously or semi-continuously. The gas sensor preferentially comprises a chromatographic column connected to a detector. In this way, conventional chromatographic columns and detectors having superior performance in terms of re-usability, reliability and affordability can be utilized.

Alternatively, the gas sensor comprises a detector, wherein the detector comprises multiple non-identical sensors. In this embodiment, it is not required to provide a chromatographic column. Instead, the function of the chromatographic column is provided by the detector comprising the multiple non-identical sensors. In particular, an array of sensors may be utilized. The sensors may detect gases based on known techniques like chemoresistive, electro-chemical and optical absorption. The embodiment provides the benefit of a higher measurement speed compared to a solution comprising a chromatographic column and a detector. Preferably, the multiple non-identical sensors comprise different sensor materials and/or operating conditions.

According to one embodiment, the conversion device comprises a droplet dispenser connected to the sampling device, and a pyrolysis well that is configured to convert droplets provided by the droplet dispenser into gas, in particular, by means of heating. The pyrolysis well can beneficially convert non-volatile metabolites into multiple volatile fragments that can be detected with gas chromatography. Preferably, the carrier gas provided to the pyrolysis well does not contain oxygen to avoid a complete conversion to CO₂. The pyrolysis in the pyrolysis well can be performed by rapidly heating the wall of the pyrolysis well, either resistively or by means of RF coil, in particular utilizing the curie effect. The droplet can be transported by pressure, e.g. piezo, gravity or electrowetting. Furthermore, the pyrolysis well may utilize split/splitless injection of liquids, heated in the well above their boiling points. For the pyrolysis, the temperature can be lower than the boiling point, since the rapid heating in absence of oxygen breaks molecules into volatile fragments. Preferably, the fragmentation may depend on temperature, which allows for the optional benefit to achieve extra selectivity of marker detection, by performing sequential analysis runs at different pyrolysis temperatures.

According to one embodiment, the sampling device comprises a liquid filter connected to the fluid inlet, wherein the liquid filter provides a retentate stream and a permeate stream, and wherein either of the retentate stream or the permeate stream is connected to the conversion device, in particular the droplet dispenser. The additional liquid filter enhances selectivity for sample liquids containing mixtures of markers. According to an alternative embodiment, the liquid filter may be configured as a liquid chromatography column, to which sample fluid is injected. The output of the liquid chromatography column is fed to the droplet dispenser or any alternative liquid-to-gas converter. For this embodiment, it is beneficial to repeat the liquid-to-gas conversion multiple times, since at different times different compounds will reach the output of the liquid chromatography column.

According to one embodiment, the conversion device comprises a liquid-to-gas-converter that is configured to convert liquid sampled by the sampling device into gas, and a valve arrangement, wherein the valve arrangement is configured to provide the following modes of operation: a feeding mode in which the sampling device is connected to the liquid-to-gas-converter to fill the liquid-to-gas-converter with the liquid sample, a flushing mode in which a carrier gas source is connected to the liquid-to-gas-converter for flushing excess fluid using carrier gas, and an analysis mode in which the liquid-to-gas-converter is connected to the gas sensor. The liquid-to-gas-converter can be configured as a pyrolysis well or a solid-phase microextraction device (SPME).

The conversion device may comprise a six-port-valve connected to the sampling device, the carrier gas source and the gas sensor.

The gas chromatography instrument may further comprise a valve arranged between the liquid-to-gas-converter and the gas sensor, wherein the valve comprises at least three ports, and wherein a first port is connected to the liquid-to-gas-converter, a second port is connected to the gas sensor and a third port is connected to an outlet. In one embodiment, the liquid-to-gas-converter comprises a six-port-valve. In this embodiment, the advantage of a high robustness is achieved, since possible non-volatile ashes that may remain in the pyrolysis well are flushed away in the next sampling phase. Preferably, the surface area next to the pyrolysis well is covered with hydrophobic coating to facilitate the flushing step. In an embodiment, where the solid-phase microextraction device (SPME) is utilized, the SPME is preferably heated gradually or stepwise to achieve desorption of selective volatile species to facilitate selective detection. Preferably, ambient air is used as carrier gas. Due to the SPME sampling, analytes are upconcentrated, resulting in high sensitivity of detection.

In one embodiment, the conversion device comprises a membrane connected to the sampling device and the gas sensor, wherein the membrane is configured to outgas volatile compounds from the liquid sample. This outgassing is also called pervaporation. Preferably, the conversion device comprises three-way valves to allow closing a gas chamber below the membrane to up-concentrate volatile compounds and collectively inject them into the gas sensor. The liquid above the membrane can be heated to enhance the outgassing rate, allowing detection of less volatile compounds. The embodiment takes advantage of a simple construction. Preferably, the membrane is connected to a carrier gas source, wherein ambient air is provided as carrier gas. It is preferred to use a volatile organic compounds (VOC) filter, to filter the ambient air before providing it to the conversion device. The VOC filter removes VOCs present in the sampled ambient air as clean reference. This approach is beneficial compared to carrier gas from a pressurized cylinder, because the embodiment allows having extra underpressure in a gas chamber below the membrane. In one embodiment, the chromatography instrument comprises a processor, wherein the processor is configured to carry out the steps of the method as defined in claim 15.

In another aspect of the present invention, a method for autonomously determining a concentration of a volatile marker in a liquid sample using gas chromatography is presented. The method comprises autonomously providing a sample fluid to be analyzed, autonomously converting at least part of the sample fluid into a gas sample, and autonomously determining a marker concentration in the gas sample.

In a further aspect of the present invention, a computer program for autonomously determining a concentration of a marker in a sample is presented, the computer program comprising program code means for causing an instrument as defined in any of claims 1 to 13 to carry out the steps of the method as defined in claim 14, when the computer program is run on a computer controlling the instrument.

It shall be understood that the gas chromatography instrument of claim 1, the method of claim 14, and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily an embodiment of a gas chromatography instrument for determining a concentration of a volatile marker in a liquid sample,
Fig. 2 shows schematically and exemplarily an alternative embodiment of a gas chromatography instrument for determining a concentration of a volatile marker in a liquid sample,
Fig. 3 shows schematically and exemplarily another alternative embodiment of a gas chromatography instrument for determining a concentration of a volatile marker in a liquid sample,
Fig. 4 shows schematically and exemplarily yet another alternative embodiment of a gas chromatography instrument for determining a concentration of a volatile marker in a liquid sample,
Fig. 5 shows schematically and exemplarily a further alternative embodiment of a gas chromatography instrument for determining a concentration of a volatile marker in a liquid sample,
Fig. 6 shows schematically and exemplarily an alternative embodiment of a gas chromatography instrument for determining a concentration of a volatile marker in a liquid sample,
Fig. 7 shows schematically and exemplarily another alternative embodiment of a gas chromatography instrument for determining a concentration of a volatile marker in a liquid sample,
Fig. 8 shows schematically and exemplarily a further alternative embodiment of a gas chromatography instrument for determining a concentration of a volatile marker in a liquid sample, and
Fig. 9 shows an embodiment of a method for autonomously determining a concentration of a volatile marker in a liquid sample using gas chromatography instrument.

### DETAILED DESCRIPTION OF EMBODIMENTS

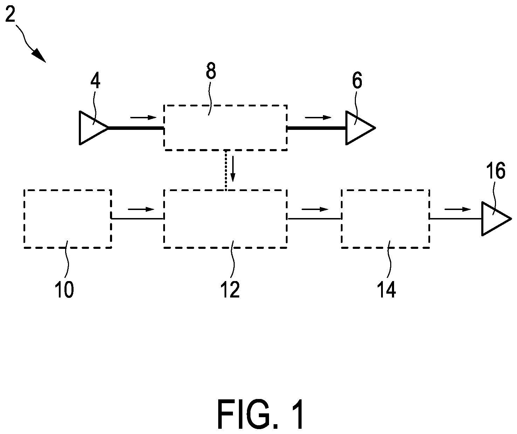

Fig. 1 shows a first embodiment of a gas chromatography instrument 2 for determining a concentration of a volatile marker in a liquid sample. The gas chromatography instrument 2 comprises a sampling device 8. The sampling device 8 is configured to automatically sample a liquid that is provided by a fluid sampling inlet 4. The sampling device 8 is furthermore connected to a fluid sampling outlet 6. The sampling device 8 is fluidically connected to a conversion device 12. The conversion device 12 is configured to convert the provided liquid from the sampling device 8 into gas. With the help of a carrier gas provided by a carrier gas source 10, the gas generated in the conversion device is supplied to a gas sensor 14. The gas sensor 14 is configured to analyze a concentration of a volatile marker in the provided gas sample. The gas sensor 14 is connected to a gas outlet 16. The gas chromatography instrument 2 according to the invention allows for an automated, in particular semi-continuous, monitoring of relevant markers in liquid samples. The gas sensor 14 may comprise conventional sensing means. These conventional sensing means typically have superior performance in terms of re-usability, reliability and affordability compared to liquid sensors used in the prior art.

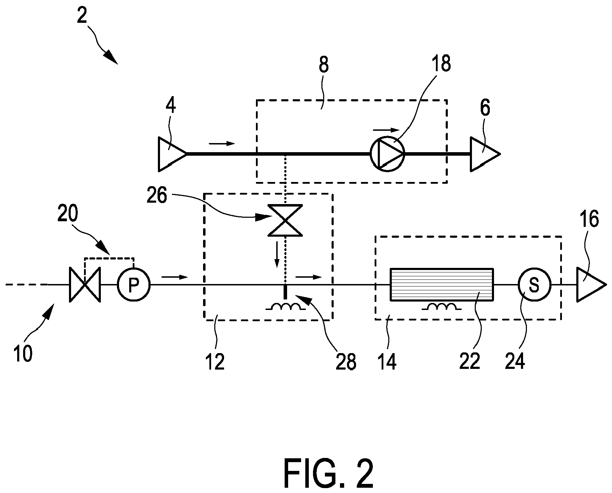

In the embodiment of Fig. 2, the configurations of the sampling device 8, the conversion device 12, and the gas sensor 14 are detailed. The sampling device 8 comprises a fluid pump 18 for pumping the sampling fluid from the fluid sampling inlet 4 to the fluid sampling outlet 6 and towards the conversion device 12. The conversion device 12 comprises a droplet dispenser that is fluidically connected to the sampling device 8. The droplet dispenser 26 generates droplets of the sample liquid that are dispensed to a pyrolysis well 28. The pyrolysis well 28 is heated to convert the sample droplets into volatile markers that are carried to the gas sensor 14. The gas sensor 14 comprises a chromatographic column 22 and a detector 24 connected to the chromatographic column 22.

The gas comprising the volatile markers that is generated in the pyrolysis well 28 is provided to the chromatographic column along with carrier gas supplied by the carrier gas source 10. The detector 24 records the output of the chromatographic column 22 as a function of time to establish a chromatogram. To improve a selectivity, different temperatures may be used at the pyrolysis well 28 and the measurement process may be conducted repeatedly for different temperatures. It is preferred that the carrier gas source 10 does not contain oxygen to avoid complete conversion to CO₂. The pyrolysis well 28 may comprise a wall that can be heated rapidly, wherein the heating may be conducted by means of an RF coil or resistively. Within the droplet dispenser 26, the droplets can be transported by pressure, for example using the piezo-effect, gravity or electrowetting. In the presented embodiment, the pyrolysis well 28 includes the widely used split/splitless injection of liquids, heated in the well above their boiling points. For the pyrolysis, the temperature can be lower than the boiling point, since the rapid heating in absence of oxygen breaks molecules into volatile fragments.

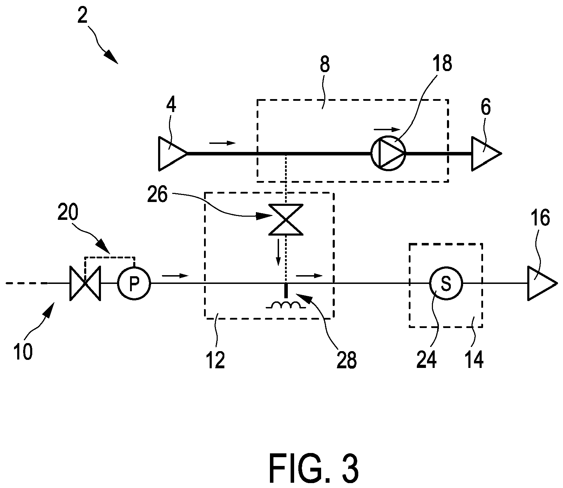

Fig. 3 shows an alternative embodiment of a gas chromatography instrument 2. Compared to the embodiment of Fig. 2, Fig. 3 proposes an alternative design of the gas sensor 14. The gas sensor 14 of Fig. 3 only comprises a detector 24. The detector 24 is preferably composed of multiple non-identical sensors, for instance, an array of sensors composed of different sensor materials and/or operating conditions. Thereby, the selectivity of the instrument 2 is improved. The individual sensors may detect gases based on known techniques like chemoresistive, electro-chemical and optical absorption. All in all, compared to the embodiment of Fig. 2, the measurement speed may be improved with the configuration of Fig. 3.

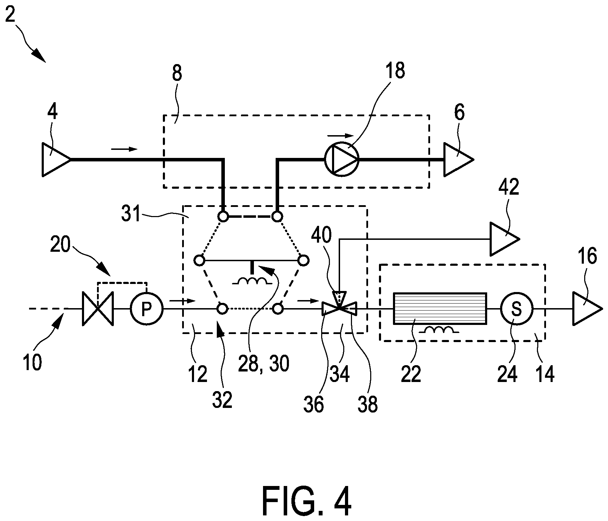

Fig. 4 shows yet another alternative embodiment of a gas chromatography instrument 2. In this embodiment, the conversion device 12 comprises a liquid-to-gas-converter 30 that is configured to convert liquid sampled by the sampling device 8 into gas. The liquid-to-gas-converter 30 is configured as a pyrolysis well 28 connected to a valve arrangement 31 that is configured as a six-port-valve 32. The valve arrangement 31 may be switched to a feeding mode in which the sampling device 8 is fluidically connected to the liquid-to-gas-converter 30 to fill the liquid-to-gas-converter 30 with the liquid sample, and a flushing mode in which a carrier gas source 10 is fluidically connected to the liquid-to-gas-converter 30 for flushing excess fluid using carrier gas and an analysis mode in which the liquid-to-gas-converter 30 is fluidically connected to the gas sensor 14. Switching between the mentioned modes is conducted by means of the six-port-valve 32. The conversion device 12 furthermore comprises a valve 34 arranged between the six-port-valve 32 and the gas sensor 14. The valve 34 comprises three ports 36, 38, 40. The first port 36 is connected to the six-port-valve 32. The second port 38 is connected to the gas sensor 14 and the third port 40 is connected to an outlet 42. Similar to the embodiment of Fig. 2, the gas sensor 14 comprises the chromatographic column 22 and the detector 24.

During feeding mode operation, the pyrolysis well 28 is filled with the sample liquid, when the six-port-valve 32 is in the dotted position. Afterwards, in the flushing mode, the excess fluid is flushed dry using carrier gas provided by the carrier gas source 10 and vented via the outlet 42. Therefore, the six-port-valve 32 is switched into the position illustrated with the dashed black line. Afterwards, in the analysis mode, the pyrolysis well 28 is heated. The resulting volatile pyrolysis products are transported with the help of the carrier gas to the gas sensor 14. Optionally, a surface area next to the pyrolysis well 28 is covered with hydrophobic coating to facilitate the flushing step. This embodiment has been found to be robust, since the possible non-volatile ashes remaining in the pyrolysis well 28 are flushed away in the next sampling phase.

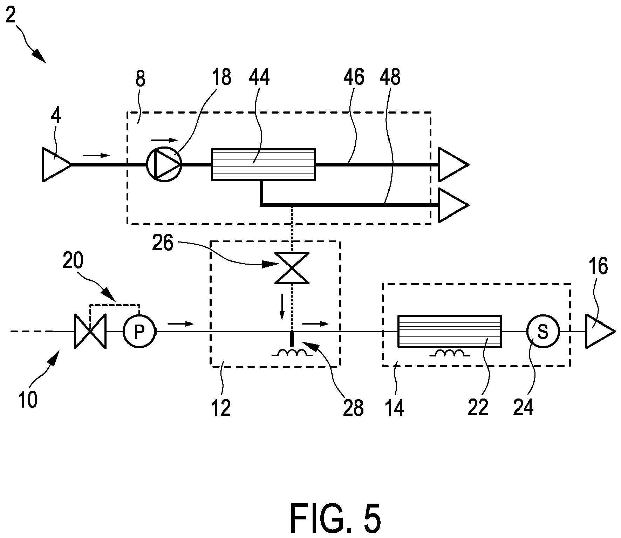

In the embodiment of Fig. 5, the conversion device 12 and the gas sensor 14 are equal to the embodiment of Fig. 2. The sampling device 8 configuration however differs. In the embodiment of Fig. 5, the sampling device 8 comprises the fluid pump 18 pumping sampling fluid from the fluid sampling inlet 4 to a liquid filter 44. The liquid filter 44 provides a retentate stream 46 and a permeate stream 48. The permeate stream 48 is connected to the conversion device 12, in particular, to the droplet dispenser 26. In this embodiment, the advantage of a higher selectivity notably for a sample liquid containing mixtures of markers are achieved by means of the liquid filter 44.

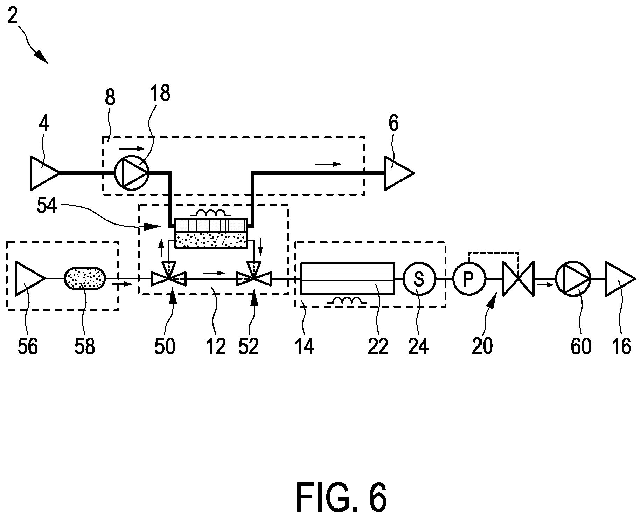

In the embodiment of Fig. 6, a membrane 54 is utilized to outgas volatile compounds from a liquid sample provided by the sampling device 8. This is also called pervaporation. The valves 50, 52 allow to close a gas volume defined by a lower part of the membrane 54 to up-concentrate volatile compounds (in the dashed black position) and collectively inject them into the chromatographic column 22 of the gas sensor 14. As carrier gas, ambient air is provided by an ambient air inlet 56. The ambient air is filtered by a VOC filter 58 before reaching the membrane 54. The pressure controller 20 is arranged downstream of the gas sensor 14. With the help of a pump 60, the carrier gas comprising the volatile markers is guided towards a gas outlet 16. The use of ambient air filtered by a VOC filter 58 is beneficial compared to the use of carrier gas from a pressurized cylinder, because this embodiment allows to have, in particular extra, underpressure below the membrane 54. Optionally, the liquid provided by the sampling device 8 above the membrane 54 is heated to enhance the outgassing rate, allowing detection of less volatile compounds. All in all, the embodiment shown in Fig. 6 is simpler and ambient air may be used as carrier gas.

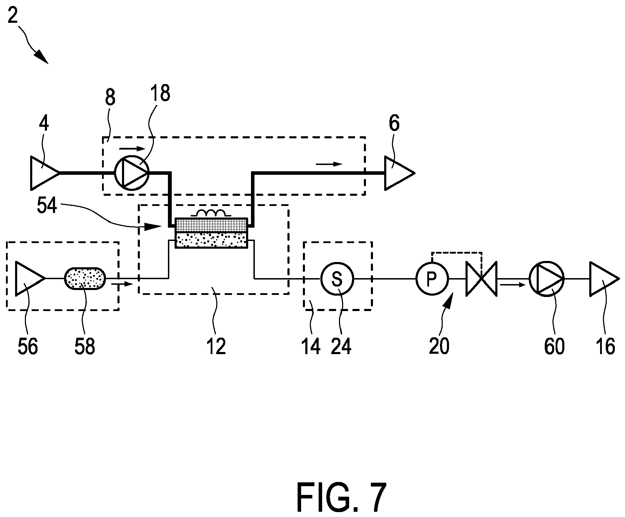

Fig. 7 shows an alternative embodiment also utilizing a membrane 54. Compared to the embodiment of Fig. 6, the gas sensor 14 only comprises a detector 24. By removing the chromatographic column 22 (see Fig. 6) from the gas sensor 14, it is also possible to remove the valves 50, 52 and allow for a continuous detection of the gases that permeate through the membrane 54. It is preferred for enhanced selectivity to use an array of non-identical detectors 24, for instance an array of chemoresistive or electro-chemical sensors composed of different sensor materials and/or operating conditions. This allows for additional selectivity and compensates for the removal of the chromatographic column 22 compared to the embodiment of Fig. 6.

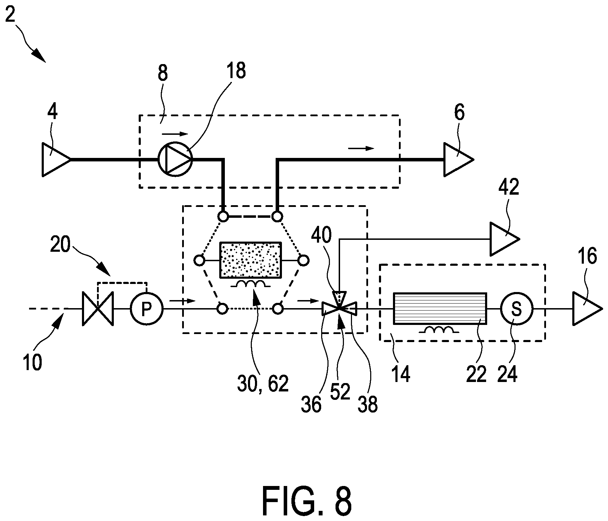

Fig. 8 shows yet another alternative embodiment of a gas chromatography instrument 2 that is similar to the embodiment of Fig. 4. As a difference, however, the pyrolysis well 28 is replaced by a solid-phase microextraction device (SPME) 62. The device 2 according to the embodiment of Fig. 8 is operated as follows:

Solid-phase microextraction (SPME) sorbents are used to extract analytes from the sampled liquid when the six-port-valve 32 is switched to the dotted position. Afterwards, the SPME 62 sorbents are flushed dry using carrier gas in the dashed position of the six-port-valve 32. Excess fluid is vented via the outlet 42. After the SPME 62 is flushed dry, it is heated and resulting desorbed VOCs are transported to and analyzed by the gas sensor 14. The SPME 62 may be heated gradually or stepwise to achieve desorption of selective volatile species to facilitate selective detection. The embodiment of Fig. 8 is beneficial, because ambient air may be used as carrier gas and analyzed or up-concentrated during SPME sampling, resulting in high sensitivity of detection.

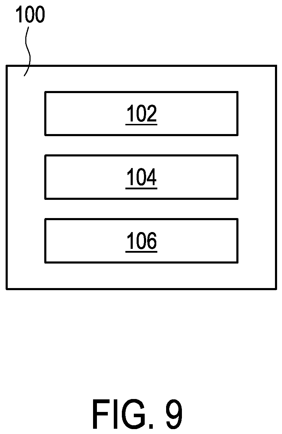

Fig. 9 shows an embodiment of a method 100 for autonomously determining a concentration of a volatile marker in a liquid sample using gas chromatography. The method 100 comprises the steps of autonomously providing 102 a sample fluid to be analyzed, autonomously converting 104 at least part of the sample fluid into a gas sample, and autonomously determining 106 a marker concentration in the gas sample.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a gas chromatography instrument for autonomously determining a concentration of a volatile marker in a liquid sample. The instrument comprises a sampling device configured for autonomously sampling a liquid to be analyzed, a gas sensor, and a conversion device connected to the sampling device and the gas sensor. By utilizing a conversion device that is configured to autonomously convert the sampled liquid into a gas to be analyzed by the gas sensor, an automated continuous monitoring of relevant markers in liquid samples is achieved.

## Claims

1. Gas chromatography instrument (2) for autonomously determining a concentration of a volatile marker in a liquid sample, the instrument (2) comprising:
- a sampling device (8) configured for autonomously sampling a liquid to be analyzed,
- a gas sensor (14), and
- a conversion device (12) connected to the sampling device (8) and the gas sensor (14),
wherein the conversion device (12) is configured to autonomously convert the sampled liquid into a gas to be analyzed by the gas sensor (14).

2. The gas chromatography instrument (2) as defined by claim 1, wherein the sampling device (8) is connected to a fluid sampling inlet (4) and to a fluid sampling outlet (6), and wherein fluid to be analyzed is provided by the fluid sampling inlet (4) continuously or semi-continuously.

3. The gas chromatography instrument (2) as defined by any of claims 1 or 2, wherein the gas sensor (14) comprises a chromatographic column (22) connected to a detector (24).

4. The gas chromatography instrument (2) as defined by any of the preceding claims, wherein the gas sensor (14) comprises a detector (24), and wherein the detector comprises multiple non-identical sensors.

5. The gas chromatography instrument (2) as defined by claim 4, wherein the multiple non-identical sensors comprise different sensor materials and/or operating conditions.

6. The gas chromatography instrument (2) as defined by any of the preceding claims, wherein the conversion device (12) comprises a droplet dispenser (26) connected to the sampling device (8), and a pyrolysis well (28) that is configured to convert droplets provided by the droplet dispenser (26) into gas, in particular by means of heating.

7. The gas chromatography instrument (2) as defined by any of the preceding claims, wherein the sampling device (8) comprises a liquid filter (44) connected to the fluid sampling inlet (4), wherein the liquid filter (44) provides a retentate stream (46) and a permeate stream (48), and wherein either of the retentate stream (46) or the permeate stream (48) is connected to the conversion device (12)

8. The gas chromatography instrument (2) as defined by any of claims 1 to 5, wherein the conversion device (12) comprises a liquid-to-gas-converter (30) that is configured to convert liquid sampled by the sampling device (8) into gas, and a valve arrangement (31), wherein the valve arrangement (31) is configured to provide the following modes of operation:
- a feeding mode in which the sampling device (8) is fluidically connected to the liquid-to-gas-converter (30) to fill the liquid-to-gas-converter (30) with the liquid sample,
- a flushing mode in which a carrier gas source (10) is fluidically connected to the liquid-to-gas-converter (30) for flushing excess fluid using carrier gas, and
- an analysis mode in which the liquid-to-gas-converter (30) is fluidically connected to the gas sensor (14).

9. The gas chromatography instrument (2) as defined by claim 8, wherein the liquid-to-gas-converter (30) is configured as a pyrolysis well (28) or a solid-phase microextraction device (SPME) (62).

10. The gas chromatography instrument (2) as defined by claim 8 or 9, wherein the conversion device (12) comprises a six-port-valve (32) connected to the sampling device (8), the carrier gas source (10) and the gas sensor (14).

11. The gas chromatography instrument (2) as defined by claim 8,9 or 10, further comprising a valve (34) arranged between the liquid-to-gas-converter (30) and the gas sensor (14), wherein the valve (34) comprises at least three ports (36, 38, 40), and wherein a first port (36) is connected to the liquid-to-gas-converter (30), a second port (38) is connected to the gas sensor (14) and a third port (40) is connected to an outlet (42).

12. The gas chromatography instrument (2) as defined by any of claim 1 to 5, wherein the conversion device (12) comprises a membrane (54) connected to the sampling device (8) and the gas sensor (14), wherein the membrane (54) is configured to outgas volatile compounds from the liquid sample.

13. The gas chromatography instrument (2) as defined by any of the preceding claims, comprising a processor, wherein the processor is configured to carry out the steps of the method (100) as defined in claim 14.

14. A method (100) for autonomously determining a concentration of a volatile marker in a liquid sample using gas chromatography, the method (100) comprising:
- autonomously providing (102) a sample fluid to be analyzed,
- autonomously converting (104) at least part of the sample fluid into a gas sample, and
- autonomously determining (106) a marker concentration in the gas sample.

15. A computer program for autonomously determining a concentration of a marker in a sample, the computer program comprising program code means for causing an instrument (2) as defined in any of claims 1 to 13 to carry out the steps of the method (100) as defined in claim 14, when the computer program is run on a computer controlling the instrument (2).
